Europäisches Patentamt

**European Patent Office**

**Office européen des brevets**

(19)

(11) Numéro de publication:

**0017715**
A2

(12)

# DEMANDE DE BREVET EUROPEEN

(21) Numéro de dépôt: 80100622.2

(22) Date de dépôt: 07.02.80

(51) Int. Cl.³: **G 06 F 3/02**

(30) Priorité: 02.04.79 US 26251

(43) Date de publication de la demande: 29.10.80
Bulletin 80/22

(84) Etats contractants désignés: DE FR GB

(71) Demandeur: International Business Machines
Corporation, Armonk, N.Y. 10504 (US)

(72) Inventeur: Howell, Dan Michael, 3050 Kirklevington Dr.
Apt. 30, Lexington KY 40502 (US)
Inventeur: Kolpek, Robert Adolph, 309 Mariemont Drive,
Lexington KY 40505 (US)
Inventeur: Schuller, William Martin, 3485 Birkenhead
Drive, Lexington KY 40503 (US)

(74) Mandataire: Bonneau, Gérard, COMPAGNIE IBM
FRANCE Département de Propriété Industrielle,
F-06610 La Gaude (FR)

(54) Système de traitement, d'enregistrement et de communication de données entrées par clavier.

(57) Système de traitement, d'enregistrement et de communication de données comportant un clavier (12) pour
entrer des données, une mémoire (26) pour emmagasiner
les signaux numériques engendrés, un dispositif d'enregistrement (18) et un modem (20) utilisé pour démoduler
les données provenant du dispositif (18) et les moduler
de façon à les envoyer sur une ligne de communication par
l'intermédiaire du coupleur téléphonique (22) de sorte que
les signaux sont dépourvus de la distorsion provenant de
l'enregistrement/reproduction. De même, à la réception
des signaux provenant de la ligne de communication, le
modem démodule initialement les signaux, et les remodule
ensuite avant de les enregistrer dans le dispositif d'enregistrement (18), de sorte que les signaux enregistrés ne
présentent plus de distorsion.

# SYSTEME DE TRAITEMENT, D'ENREGISTREMENT ET DE COMMUNICATION DE DONNEES ENTREES PAR CLAVIER

## Description

### Domaine technique

La présente invention concerne un système de traitement, d'enregistrement et de communication de données entrées par clavier et, plus particulièrement, un système combinant une machine à écrire et une machine à dicter, utilisant un modem pour démoduler et remoduler les signaux analogiques transmis entre le dispositif d'enregistrement du système de la présente invention et un système éloigné.

### Etat de la technique antérieure

De façon générale, les dispositifs d'enregistrement utilisés dans les systèmes de traitement de données utilisent des techniques basées sur un enregisrement numérique, comme par exemple, le dispositif d'enregistrement décrit dans le brevet des Etats-Unis d'Amérique No. 3 528 063. Cependant, un inconvénient rencontré dans ce type d'enregistrement est le prix de revient. Le prix de la logique numérique en comparaison de la vitesse d'enregistrement n'est compensé que pour une très forte densité d'enregistrement et pour un faible taux d'erreurs.

En outre, un système tel que décrit dans le brevet des Etats-Unis d'Amérique No. 3 528 063 transmet et reçoit des données qui sont sous forme numérique. La logique requise pour remplir cette fonction augmente le prix de revient du système. Un autre problème rencontré dans la transmission de signaux numériques est la perte de bits qui augmente le risque d'une transmission erronée.

### Exposé de l'invention

L'objet de la présente invention est de convertir les

signaux numériques frappés au clavier en des signaux analogiques à enregistrer par un dispositif d'enregistrement
classique, et de transmettre de façon rigoureuse ces signaux
analogiques enregistrées sur des lignes téléphoniques
connectées à un terminal.

Cet objet est réalisé à l'aide d'un modem à double fonction
utilisé dans un système combinant une machine à écrire/
une machine à dicter pour effectuer l'enregistrement ainsi
que la transmission de signaux audibles sur des lignes de
communication. Jusqu'ici, la fonction du modem se limitait
uniquement à un de ces deux modes de fonctionnement. Pour
des vitesses d'enregistrement faibles, il est intéressant
d'utiliser des modems dans des dispositifs d'enregistrement
bon marché, vu qu'ils peuvent accepter une forte distorsion
sur la ligne de communication. Les modems offrent au système d'enregistrement des caractéristiques qui compensent
les différences de vitesse d'enregistrement/lecture, et la
perte de bits qui est inhérente au dispositif d'enregistrement magnétique bon marché. Le dispositif d'enregistrement
d'informations du système enregistre l'information analogique frappée au clavier par la dactylographe ainsi que
l'information audible que peut comprendre l'être humain. La
double utilisation du modem et du dispositif d'enregistrement d'informations réduit fortement le prix de revient
du système sans pour autant augmenter le taux d'erreur des
données.

Le système de traitement, d'enregistrement et de communication de l'inversion comprend un clavier d'entrée de
données, une mémoire pour emmagasiner les signaux numériques
engendrés à la suite de l'actionnement du clavier, un
dispositif d'impression, un dispositif d'enregistrement
pouvant être utilisé comme machine à dicter et un modem
dont la partie modulation sert à moduler les signaux numériques en signaux analogiques de la bande vocale pouvant
être enregistrés par le dispositif d'enregistrement, et
dont la partie démodulation sert à démoduler les signaux
analogiques enregistrés par le dispositif d'enregistrement en signaux numériques pouvant être emmagasinés dans la mémoire.

Le système comprend également un moyen de communication pour la transmission de signaux entre le système et un système éloigné par l'intermédiaire d'une ligne de communication, et un moyen de connexion pour connecter le modem entre le dispositif d'enregistrement et le moyen de communication de façon à convertir les signaux analogiques à transmettre au système éloigné en signaux numériques et reconvertir les signaux numériques en signaux analogiques. En effet, une simple transmission des signaux enregistrés sur la ligne de communication entraînerait des taux d'erreurs plus élevés. Les étages de démodulation/remodulation du modem donnent sur la ligne des signaux presque parfaits dépourvus de la distorsion qui aurait pu être introduite par les opérations d'enregistrement/reproduction. En outre, à la réception des signaux provenant de la ligne de communication, le modem démodule initialement les signaux d'information analogiques d'entrée et ensuite les remodule avant de les enregistrer dans le dispositif d'enregistrement. Vu que les signaux passent deux fois dans le modem, il y a enregistrement de signaux presque parfaits qui n'ont pas été déformés sur la ligne.

## Brève description des figures

La Figure 1 représente un diagramme de fonctionnement général d'un système de traitement, d'enregistrement et de communication de données, qui utilise un modem placé entre le dispositif d'enregistrement d'informations du système et une ligne de communication.

La Figure 2 représente schématiquement le système de traitement, d'enregistrement et de communication de données conformément à la présente invention.

La Figure 3 représente schématiquement un diagramme du système illustré sur les Figures 1 et 2.

4    0017715

Les Figures 4, 5 et 6 sont des schémas détaillés illustrant les fonctions du système de la présente invention.

La Figure 7 représente un diagramme des temps montrant la séquence des opérations nécessaires pour mettre en mémoire des signaux frappés au clavier.

La Figure 8 représente un diagramme des temps montrant la séquence des opérations nécessaires pour extraire de la mémoire des signaux à envoyer à l'imprimante du système.

La Figure 9 représente un diagramme des temps montrant la séquence des opérations nécessaires pour enregistrer les signaux provenant de la mémoire à l'aide du dispositif d'enregistrement du système.

La Figure 10 représente un diagramme des temps montrant la séquence des opérations nécessaires pour remettre en mémoire les signaux provenant du dispositif d'enregistrement.

Les Figures 11A et 11B représentent un diagramme des temps montrant la séquence des opérations nécessaires pour que le dispositif d'enregistrement du système puisse enregistrer les signaux provenant de la ligne de communication.

Les Figures 12A et 12B représentent un diagramme des temps montrant la séquence des opérations nécessaires pour envoyer sur la ligne de communication les signaux provenant du dispositif d'enregistrement du système.

## Mode de réalisation préféré
## de l'invention

Le système de la présente invention comprend un clavier 12 qui est l'unité d'entrée du système, une imprimante 14 qui est l'unité de sortie du système, un sérialiseur/désérialiseur 16, un dispositif d'enregistrement magnétique classique 18, un modem 20, un coupleur téléphonique 22 et une unité de traitement 24 qui contrôle la mémoire 26, la

**0017715**

mémoire tampon de communication 28 et le sérialiseur/ désérialiseur 16. Ce système diffère du système décrit dans le brevet des Etats-Unis 3 528 063 en ce que la logique numérique nécessaire pour enregistrer les signaux numériques est supprimée du système pour être remplacée par le modem de la présente invention afin que des signaux audibles analogiques puissent être enregistrés à la place de signaux numériques. En outre, le système de la présente invention utilise une technique d'enregistrement en alternatif contrairement à la technique d'enregistrement en continu décrite dans le brevet des Etats-Unis mentionné ci-dessus. L'enregistrement en alternatif de la présente invention se fait dans la bande de fréquences de la parole étant donné que la partie de modulation du modem 20 convertit les signaux numériques en signaux alternatifs de 1300 et 2100 Hertz. Durant l'enregistrement analogique, la frappe au clavier 12 est enregistrée par le dispositif d'enregistrement du système avec décalages de fréquence de 1300 et 2100 Hertz.

Un autre avantage d'utiliser des techniques basées sur un enregistrement analogique réside en ce que l'utilisateur du système peut utiliser le dispositif d'enregistrement à des fins de dictée/transcription (enregistrement de la parole) et qu'il peut écouter l'enregistrement de la parole dictée et frapper au clavier cette information pour l'emmagasiner dans la mémoire 26. Une fois les données dictées emmagasinées, par frappe au clavier, dans la mémoire 26, l'opératrice du système enregistre ensuite l'information frappée au clavier se trouvant maintenant en mémoire, sur un support d'enregistrement magnétique (par exemple un disque, une cassette ou une bande) du dispositif d'enregistrement 18. Dans la présente invention, l'enregistrement se fait sur disques magnétiques. Comme cela a été mentionné préalablement, avant que l'information ne soit enregistrée dans le dispositif d'enregistrement 18, elle passe tout d'abord par le modem 20 où elle est convertie en signaux de la parole à des fréquences de 1300 et 2100 Hertz. Au cours d'une lecture, le dispositif d'enregistrement 18 repasse les signaux enregistrés dans la partie de démodulation du

6 0017715

modem 20 et dans le sérialiseur du dispositif sérialiseur/
désérialiseur 16, et après désérialisation des signaux, les
signaux peuvent être soit remis en mémoire dans la mémoire
26, soit renvoyés dans la portion de modulation du modem
20, par l'intermédiaire de la mémoire tampon de communication 28 et, ensuite, ces signaux peuvent être envoyés au
coupleur téléphonique 22 pour être transmis sur un autre
système. Le coupleur téléphonique 22 supporte le combiné
téléphonique (non représenté) et saisit les signaux audibles
au fur et à mesure qu'ils sont reçus et/ou transmis.

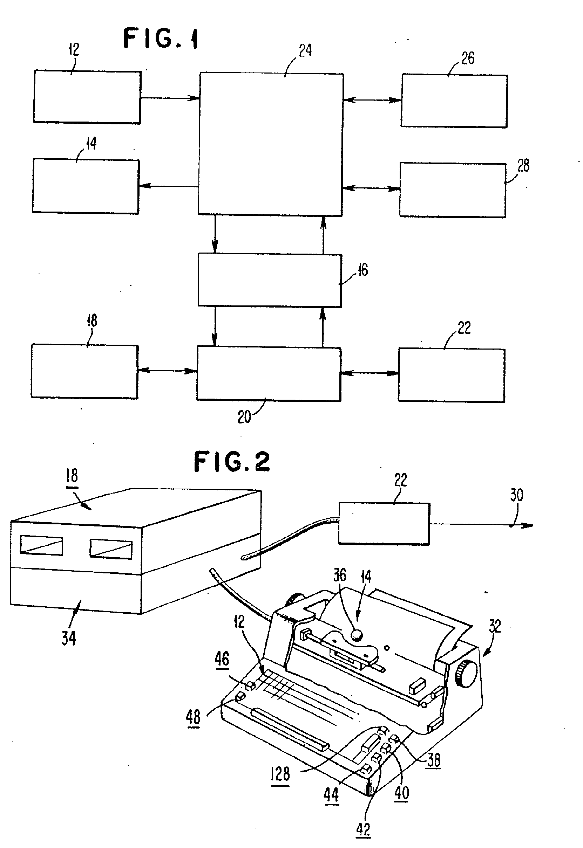

La mémoire tampon est utilisée dans le système pour remettre
en forme les signaux provenant du dispositif d'enregistrement 18 avant qu'ils ne soient appliqués sur la ligne
téléphonique 30 de la Figure 2. Une autre raison d'utiliser
la mémoire tampon de communication 28 et le modem 20 réside
en ce que le dispositif d'enregistrement 18 présente des
tolérances de vitesse qui peuvent varier entre le moment où
le signal d'origine est enregistré et le moment où le
signal est transmis sur la ligne téléphonique 30. En outre,
il existe des possibilités d'erreurs dans le dispositif
d'enregistrement 18 et d'autres possibilités d'erreurs et
de bruits dû à la transmission sur la ligne téléphonique.
Lorsque ce signal (sous forme de multiplets de données) est
reçu par le système de la présente invention en provenance
d'un autre système, la partie de démodulation du modem
20 doit traiter non seulement le signal envoyé mais également les erreurs créées par la transmission sur la ligne
téléphonique et les erreurs induites dans le signal par le
dispositif d'enregistrement de l'autre système. Pour
éliminer ce problème, avant la transmission du signal
enregistré, celui-ci est démodulé, désérialisé, transformé
en octet dans l'unité de traitement 24 et il est temporairement emmagasiné dans la mémoire tampon de communication
28. A partir de cette mémoire 28, le signal remis en forme
est sérialisé et remodulé avant d'être transmis sur la
ligne téléphonique, et ce, afin d'éliminer toutes erreurs
d'enregistrement. De façon semblable, les erreurs créées
lors de la transmission à partir d'un autre système, sont

0017715

éliminées avant d'être enregistrées, en démodulant, emmagasinant temporairement et en modulant le signal d'entrée. Durant la transmission d'un système à un autre, si la vitesse du dispositif d'enregistrement dans le système de transmission ne dépassait jamais la vitesse du dispositif d'enregistrement dans le système de réception, il ne serait pas nécessaire de faire appel à une mémoire tampon ayant une capacité supérieure à un multiplet étant donné que le dispositif d'enregistrement de réception aurait une vitesse qui se maintiendrait toujours à la vitesse de la transmission.

La mémoire 26 fonctionne pour emmagasiner temporairement le signal transmis sur la ligne de communication 30 durant une opération d'impression. La vitesse de transmission sur la ligne de communication est d'environ 1200 bauds tandis que la vitesse d'impression de l'imprimante 40 (par exemple 135 bauds) est nettement inférieure à la vitesse de transmission. Avec ce système, l'opératrice peut également emmagasiner dans la mémoire ce qu'elle frappe au clavier pendant que le signal d'entrée est reçu par le système et enregistré par le dispositif d'enregistrement 18. En conséquence, l'opératrice peut procéder à une mise en mémoire de sa frappe dans la mémoire 26 pendant qu'il y a réception d'un message sur la ligne téléphonique 30.

Sur la Figure 2, une machine à écrire électronique 32 est représentée étant connectée à une unité 34, à un dispositif d'enregistrement 18 et à un coupleur téléphonique 22. La machine à écrire 32 comprend principalement un clavier 12 et une imprimante 14. A titre d'illustration, l'imprimante est représentée sur cette Figure 2 comme étant du type à boule 36. Des touches, qui seront décrites dans la suite de l'exposé, sont représentées de chaque côté du clavier 12 de la machine à écrire 32. L'unité 34 appartient à un dispositif qui comprend l'unité de traitement 24, la mémoire 26, la mémoire tampon de communication 28, le sérialiseur/désérialiseur 16 et le modem 20. Il est bien compris que dans la technologie avancée d'intégration à grande échelle

8 0017715

(LSI), la mémoire 26 pourrait être placée dans la machine à écrire 32 au lieu de faire partie de l'unité séparée 34.

Sur la Figure 2, les touches mentionnées préalablement que porte la machine à écrire 32 correspondent à une touche de démarrage de document 38, à une touche de démarrage d'impression 40 à une touche de démarrage d'enregistrement 42, à une touche de lecture 44, à une touche de réception de données 46 et à une touche d'envoi de données 48. L'opératrice manipule la touche 38 pour commencer la frappe d'un document à mettre en mémoire. La touche de démarrage d'impression 40 est enfoncée pour procéder à une impression à partir de la mémoire 26. L'enregistrement de ce qui est emmagasiné dans la mémoire 26 se fait en enfonçant la touche 42 qui démarre une opération d'enregistrement entre la mémoire 26 et le dispositif d'enregistrement 18. Une opération inverse est amorcée entre le dispositif d'enregistrement 18 et la mémoire 26 en enfonçant la touche de démarrage de lecture 44. Dans ces deux types d'opération amorcées au clavier, le dispositif d'enregistrement 18 sert à vider le contenu de la mémoire 26. Les deux autres touches 46 et 48 de la machine à écrire 32 sont respectivement la touche de réception de données et la touche d'envoi de données. Dans un mode de communication, si l'opératrice frappe au clavier un document à introduire dans la mémoire 26 alors qu'un appel téléphonique est reçu pour transmettre des informations, le système peut toujours recevoir ces informations par l'entremise de la mémoire tampon de communication 28 par enfoncement de la touche de réception de données 46.

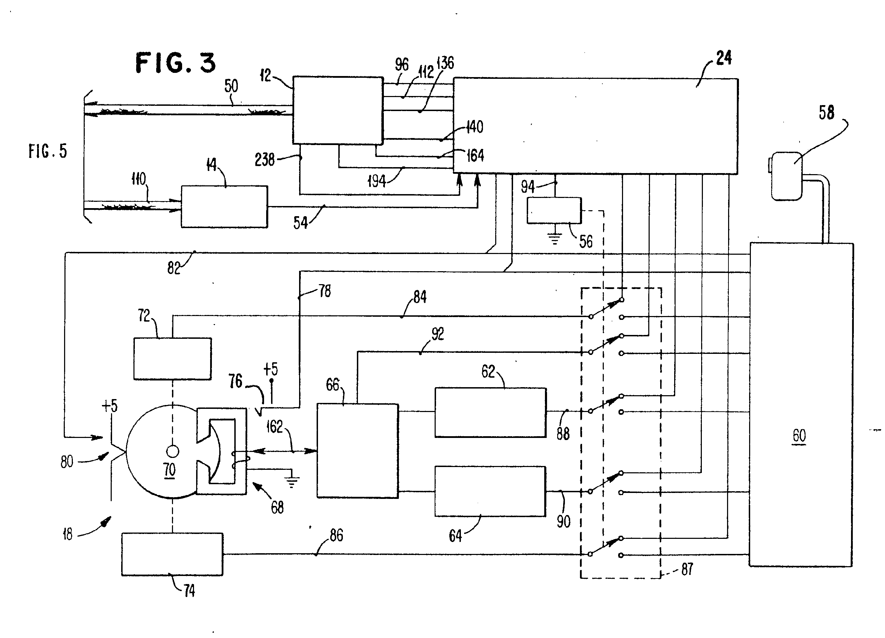

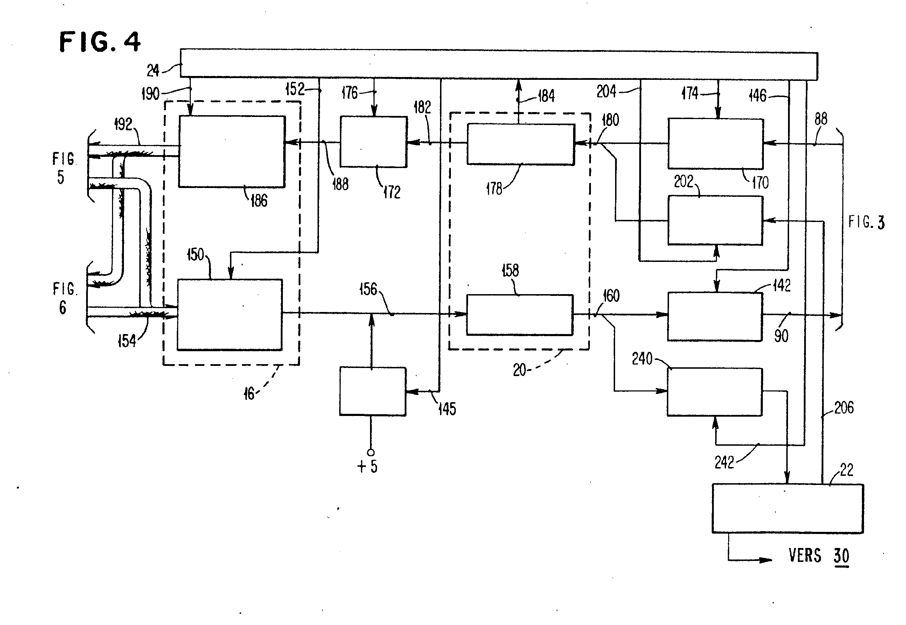

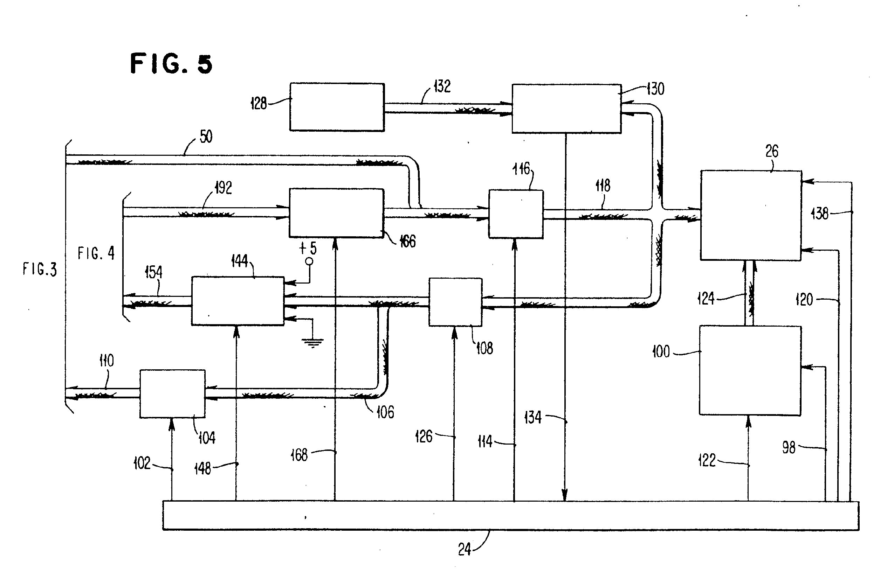

La Figure 3 représente schématiquement le système représenté sur les Figures 1 et 2. Sur cette figure, la ligne de sortie 50 du clavier 12 de la machine à écrire comprend huit conducteurs de données et de contrôle montés en parallèle qui correspondent aux touches supplémentaires de la machine à écrire 32. L'imprimante 14 a à sa sortie un seul conducteur de contôle 54 qui porte l'information sous forme d'un signal de réaction qui informe le système du moment où l'imprimante peut accepter le multiplet de données suivant. Un relais 56 du dispositif d'enregistrement est placé sur la Figure 3 au-dessous de l'unité de commande de séquence et de l'unité de traitement 24. Ce relais isole dans le dispositif 18 la portion d'enregistrement des fonctions de commande internes. Le relais 56 est actionné uniquement lorsque le système utilise le dispositif d'enregistrement 18. En conséquence, lorsque le système ne fonctionne pas, le dispositif d'enregistrement 18 peut fonctionner en tant que machine à dicter normale en dictant dans le microphone 58 sous la commande de l'unité de commande de dictée 60.

L'unité de contrôle de dictée 60 contrôle également un amplificateur de lecture 62 qui est un amplificateur classique, un circuit d'enregistrement 64 qui comprend une partie d'effacement, un commutateur d'enregistrement 66, une tête d'enregistrement 68 pour le disque magnétique 70, une unité de commande de moteur 72 et un changeur 74 pour changer le disque magnétique 70. Le commutateur d'enregistrement 66 fait passer la tête 68 de l'état de lecture à l'état d'enregistrement sous la commande respective de l'amplificateur de lecture 62 et du circuit d'enregistrement 64. Un commutateur de position de tête 76 est fermé lorsque la tête 68 se trouve sur la position de départ d'enregistrement sur le disque 70. La sortie provenant du commutateur 76 se fait sur la ligne 78. Un commutateur 80 détecte le moment où la surface d'enregistrement du disque 70 est disponible et dans l'affirmative, envoie un signal sur la sortie 82.

L'entrée 84 conduisant à l'unité de commande de moteur 72 met le moteur en marche et fait tourner le disque 70 à une vitesse constante. L'entrée 86 appliquée au changeur de disque 74 fait que le mécanisme changeur de disque prend un disque dans une position de stockage et le transfère dans l'unité d'enregistrement, et après réalisation de l'opération d'enregistrement, fait que le mécanisme changeur de disque enlève le disque ainsi traité pour le placer dans une position de stockage.

Comme le montre la Figure 3, des commutateurs de contact
à deux positions 87 sur le relais 56 connectent les sorties
respectives 88 et 90 de l'amplificateur 62 et du circuit
d'enregistrement 64 à l'unité de traitement 24 ou à l'unité
de contrôle de dictée 60 sous la commande du relais 56. La
sortie 92 provenant du commutateur d'enregistrement 66 est
également connectée à l'unité de traitement 24 et à l'unité
de contrôle de dictée 60 par les commutateurs de contact
87. En outre, l'entrée à l'unité de commande de moteur 84
et l'entrée du changeur de disque 86 sont également
connectées aux unités 24 et 60 par les commutateurs de
contact 87. Les sorties 78 et 82 provenant respectivement
du commutateur de position de tête 76 et du commutateur 80
servent d'entrées respectivement à l'unité de traitement 24
et à l'unité de commande de dictée 60 sans passer par les
commutateurs de contact 87. Comme cela a été mentionné
préalablement, tous les commutateurs de contact à deux
positions 87 sont sous la commande du relais 56 du dispositif d'enregistrement de données. Si le système se
trouve en mode de dictée normale, le dispositif d'enregistrement 18 est sous la commande de l'unité de commande de
dictée 60 et tous les commutateurs de contact 87 du relais
56 sont connectés à l'unité 60. Cependant, si le dispositif
d'enregistrement 18 est sous la commande du système, l'unité
24 actionne le relais 56 par la ligne de sortie 94 pour
permettre à tous les contacts 87 d'être connectés à cette
unité 24.

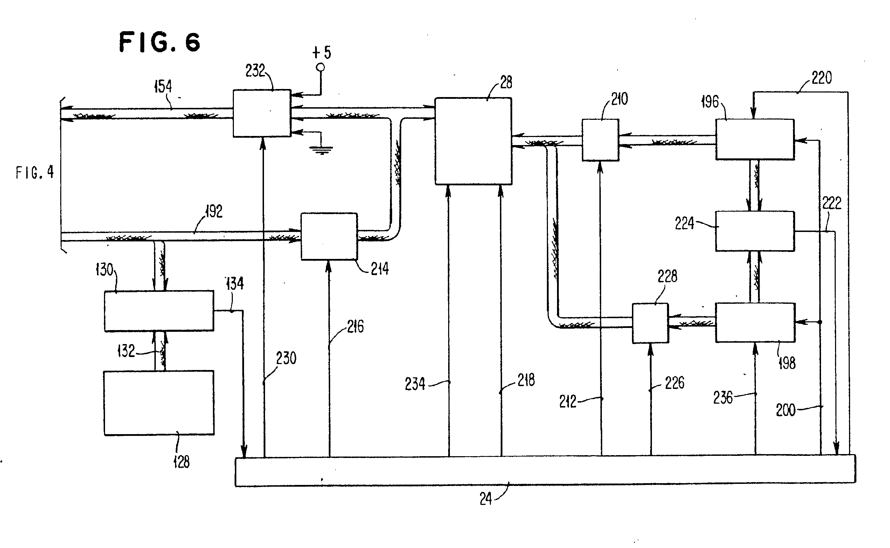

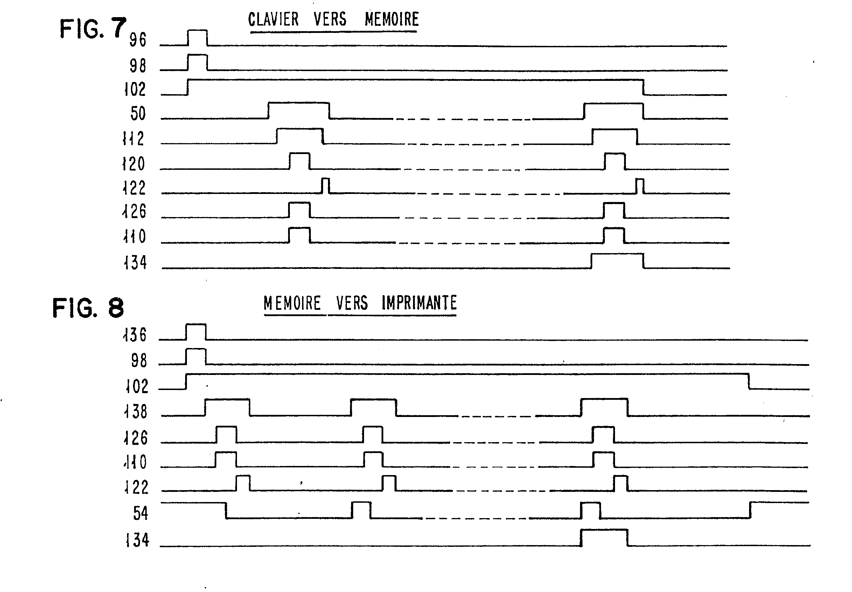

Afin de simplifier la description du mode de réalisation
préféré, les schémas des Figure 3-6 vont être décrits en se
reportant simultanément aux différents diagrammes des temps
de la Figure 6. Lorsque la touche de démarrage de document
38 est enfoncée sur le clavier 12, une sortie appliquée à
l'unité de traitement 24 apparaît sur la ligne 96, comme le
montrent les Figures 3 et 7. Comme le montre la Figure 5,
un signal est émis par l'unité de traitement 24 et apparaît
sur la sortie 98 en direction du registre d'adresses de

11                          0017715

mémoire 100 en réponse au signal de sortie 96. Sur la Figure 5, l'impulsion de sortie 98 ramène à zéro le registre d'adresses de mémoire 100 si bien que le premier multiplet frappé au clavier par l'opératrice est introduit dans la première position d'emmagasinage de la mémoire 26. Ensuite, la sortie 102, qui contrôle la porte 104, permet au signaux apparaissant à la sortie 106 en provenance de la porte de sortie 108 d'être introduits dans l'imprimante, par la porte 104 qui à son tour, envoie un signal sur la ligne 110 à l'imprimante 14 pour permettre à celle-ci de fonctionner. Lorsque l'opératrice frappe une autre touche du système (par exemple, la touche A), un signal apparaît sur la ligne 50 à partir du clavier 12, comme le montre la Figure 3. Un signal d'échantillonnage de clavier, sur la ligne 112, comme le montrent les Figures 3 et 7, est introduit dans l'unité de commande et de traitement 24 un court instant plus tard. Dans l'unité 24, le signal d'échantillonnage est converti et est envoyé sur le conducteur 114, comme le montre la Figure 5, pour atteindre la porte d'entrée 116 afin de permettre aux données à la sortie 50 du clavier 12 d'être emmagasinées dans la mémoire 26, par la sortie 118. Ensuite, l'unité 24 fournit une impulsion à la sortie 120 en direction de la mémoire 26 afin de permettre aux données qui lui sont appliquées à partir du clavier 12 d'être enregistrées dans la première position de mémoire 26. Ensuite, l'unité 24 fournit une impulsion de sortie 122 pour vider le registre d'adresses de mémoire 100 qui, à son tour, adresse la deuxième position de la mémoire 26 par la sortie 124.

Lorsque l'opératrice actionne une seconde touche, la sortie 50 transmet les données frappées au clavier; la sortie 112 fournit un signal d'échantillonnage à l'unité 24 pour indiquer que les données sont acceptables; une impulsion à la sortie 120 permet aux données frappées au clavier d'être inscrites dans la deuxième position de la mémoire, et le registre d'adresses de mémoire est à nouveau vidé par la sortie 122 à partir de l'unité de traitement 124.

Pendant le temps où les données frappées au clavier sont enregistrées dans la mémoire 26, une sortie d'instruction 126 provenant de l'unité 24 en direction de la porte de sortie 108 échantillonne les données frappées au clavier apparaissant à la sortie 118 et, ensuite, provoque l'envoi de ces données frappées au clavier à l'imprimante 14 par la porte 104 et la sortie 110, comme le montrent les Figures 3, 5 et 7. Dès lors, chaque caractère frappé au clavier 12 est imprimé jusqu'à ce que l'opératrice enfonce la touche de code de fin de document 128 sur la machine à écrire 32. Ce code de fin de document est également appliqué à la sortie 50, ligne qui contient les conducteurs de données provenant du clavier 12. Lorsque ce code est envoyé à la mémoire 26 par la porte d'entrée 116, le comparateur 130 détecte ce code par la sortie 132 et envoie un signal à l'unité 24, par la sortie 134, L'unité de traitement 24 engendre, à son tour, un signal d'interruption de l'imprimante sur la ligne 102, par la porte 104 afin que l'imprimante 14 cesse d'imprimer. En conséquence, le cycle clavier-mémoire est terminé. La quantité des données frappées au clavier présente dans la mémoire 26 dépend du nombre de fois où le registre d'adresses de mémoire 100 a été vidé.

Dans la description précédente du cycle clavier-mémoire, les données frappées au clavier ont été dirigées sur l'imprimante 14. Un cycle de mémoire-imprimante est nécessaire si l'on veut avoir une seconde copie des données frappées au clavier présentes dans la mémoire 26. Pour démarrer ce cycle, la touche de démarrage d'impression 40 est enfoncée sur le clavier 12 (Figure 2) et un signal apparaît à la sortie 136 en direction de l'unité de traitement 24, comme le montre la Figure 3. A la suite de l'enfoncement de cette touche, l'unité de traitement 24 fournit une impulsion à la sortie 98 afin de ramener le registre d'adresses de mémoire 100 à zéro. A ce moment, l'unité 24 fournit un signal à la sortie 102 qui passe par la porte 104 et qui est combiné à un signal porvenant de la porte de sortie 108 pour démarrer l'imprimante 14. Comme le montre le diagramme des temps de la Figure 8, ces étapes initiales de mémoire-imprimante apparaissent toutes en même temps. Peu après, l'unité de traitement 24 fournit sur la sortie 138 une impulsion qui provoque une opération de lecture de la mémoire 26. Lorsque le conducteur de sortie 138 est à un niveau haut, la mémoire 26 fournit à la porte de sortie 108 l'information codée alors présente dans la première cellule d'emmagasinage de la mémoire et, ensuite, la porte de sortie 108 est soumise à des impulsions envoyées sur la ligne 126 à partir de l'unité de traitement 24. Ainsi, alors que l'imprimante 14 se trouve déjà en position de fonctionnement, la porte de sortie 108 envoye cette information codée à la porte 104 où elle est à son tour envoyée à l'imprimante 14, par la sortie 110. L'information codée à imprimer par l'imprimante 14 a la forme d'une impulsion à huit bits, ou octet.

Après cette opération d'impression, l'unité de traitement 24 applique une impulsion à la sortie 122, comme le montrent les Figures 5 et 8, impulsion qui vide le registre d'adresses de mémoire 100 sur la position d'emmagasinage suivante de la mémoire 26. Même si la mémoire 26 est prête pour envoyer le multiplet d'information suivant à l'imprimante 14, le système doit attendre car l'imprimante 14 a envoyé un signal "imprimante pas prête à recevoir d'autres informations" à l'unité de traitement 24, sur la sortie 54 de la Figure 3. Rien ne va se passer jusqu'à le signal "imprimante prête" sur la ligne de sortie 54 assume à nouveau un niveau haut. Lorsqu'il en est ainsi, la ligne de sortie de lecture 138 reçoit une impulsion de lecture en provenance de l'unité de traitement 24, comme le montre la Figure 5, et la porte de sortie de mémoire 108 permet à l'information de clavier emmagasinée dans la deuxième position d'emmagasinage de la mémoire 26, d'être acheminée à l'imprimante 14, par la sortie 110. A nouveau, après cette lecture envoyée à l'imprimante 14, la ligne de sortie de "imprimante prête" 54 connectée signale un état occupé et le registre d'adresses de mémoire 100 est vidé sur la position d'emmagasinage suivante de la mémoire 26. Les étapes précédentes se poursuivent jusqu'à ce que, durant l'opération

14 0017715

de lecture, il apparaisse un signal codé qui coïncide, dans le comparateur 130, avec le code de fin de document 128, comme le montre la Figure 5. S'il y a coïncidence, un signal de sortie 134 est appliqué à l'unité de traitement 24. Cette impulsion de sortie 134 met fin au cycle de mémoire-imprimante lorsque l'imprimante passe à l'état "prêt".

L'opératrice du système peut procéder à un enregistrement permanent de l'information de clavier emmagasinée dans la mémoire 26 en enfonçant la touche de début d'enregistrement 42 sur le clavier 12 (Figure 2). Cette impulsion de clavier fait passer l'information émanant du clavier 12 sur la sortie 140, comme le montre la Figure 3, dans l'unité de traitement 24 où une impulsion est engendrée sur la sortie 98 pour restaurer le registre d'adresses de mémoire 100 (Figure 5) afin qu'il indique la première cellule d'emmagasinage de la mémoire 26. S'il n'y a pas de disque dans le dispositif d'enregistrement 18 représenté sur la Figure 3, le commutateur 80 est à l'état de repos et la sortie 82 appliquée à l'unité de traitement 24 reflète cette condition. Dans ce cas, l'unité de traitement 24 fournit un signal de changement de disque sur la sortie 86 en direction du changeur de disque 74. Sur la figure 3, il est à noter que le commutateur a deux positions 87 entre le changeur de disque 74 et les unités de traitement 24 et de dictée 60, se ferme vers l'unité de traitement 24 puisque le dispositif d'enregistrement 18 se trouve maintenant sous la commande du système.

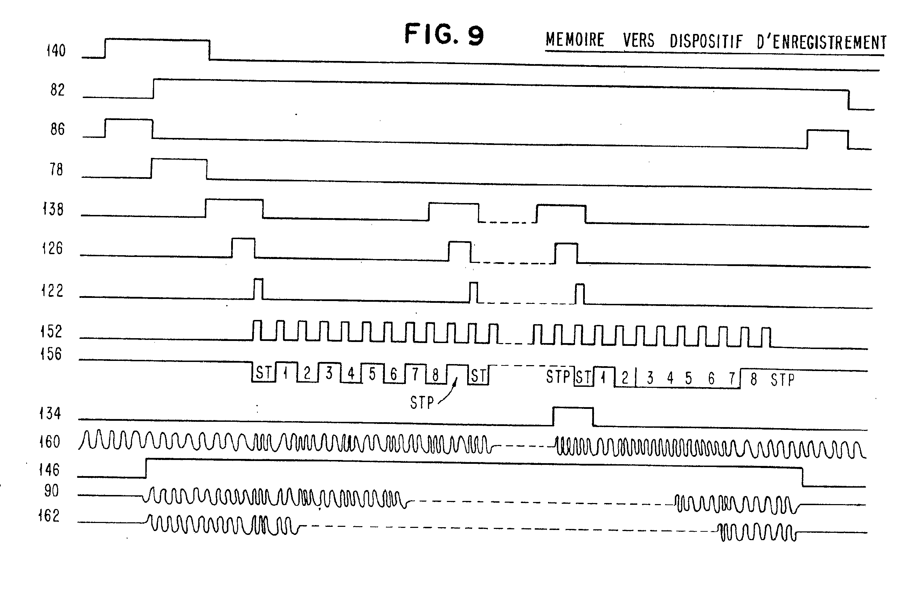

Une fois le disque en place pour l'enregistrement, les sorties 78 et 82 provenant respectivement du commutateur de position de tête 76 et du commutateur 80, présentent toutes deux des signaux positifs qui indiquent que le disque est en place et que la tête 68 est prête à fonctionner. A ce moment les portes d'enregistrement 142 et 144 des Figures 4 et 5 sont fermées par les entrées respectives 146 et 148 provenant de l'unité de traitement 24. Un signal de marquage de la fréquence basse, d'environ 1300 périodes par seconde, est à ce point, appliqué au disque 70 pour indiquer le moment où la tête démarre initialement de sa position de départ. Le diagramme des temps de la Figure 9 suit chronologiquement les étapes précédentes, et les étapes suivantes qui seront décrites en référence au cycle de mémoire-dispositif d'enregistrement à disque. Ensuite, l'unité de traitement 24 de la Figure 5 applique une impulsion de sortie en 138 en direction de la mémoire 26 pour permettre aux données présentes dans la première position d'emmagasinage d'être à nouveau disponibles sur la porte de sortie de mémoire 108. Après quoi, la porte 108 est soumise à des impulsions sur la ligne 126; le registre d'adresses de mémoire 100 de la Figure 5 est lu sur la sortie 122 et le registre à décalage (sérialiseur) 150 de l'unité sérialiseur/désérialiseur 16, Figure 4, est soumis à des impulsions sur la sortie 152, en provenance de l'unité de traitement 24. Une fois que la porte de sortie de mémoire 108 a été soumise à des impulsions par le conducteur 126, les données provenant de la mémoire 26 sont envoyées, par la porte d'enregistrement 144 et la sortie 154, au sérialiseur 150 de la Figure 4. Les huit bits de données en parallèle sur la sortie 150 sont convertis en série sur la sortie 156 à partir du sérialiseur 150. Ces données en série sont envoyées au modulateur 158 du modem 20 dans lequel les impulsions sont converties en des fréquences de 1300 et 2100 Hertz. Ces signaux sur la sortie 160 en provenance du modulateur 158 sont envoyés par la porte d'enregistrement 142 et la sortie 90 à la logique d'enregistrement du dispositif d'enregistrement 18 de la Figure 3. Ici, les signaux traversent les circuits d'enregistrement 64 et le commutateur d'enregistrement 66 pour atteindre la tête 68 par l'interface 162. Au moment où le bit de départ est sérialisé, le registre d'adresses de mémoire est vidé vers la position d'emmagasinage suivante de la mémoire 26, par la ligne 122 (Figure 5), comme cela a été décrit préalablement. Cette opération se poursuit jusqu'à ce que le dernier multiplet présent dans la mémoire 26 soit lu et sérialisé dans le dispositif d'enregistrement 14.

Lorsque le dernier caractère est lu dans la mémoire, le code lu dans la mémoire est à nouveau un code de fin de document qui permet au comparateur 130 de procéder à une comparaison de ce code de fin de document avec le code de sortie provenant des circuits de fin de document 128 de la Figure 5. La sortie 134 provenant du comparateur 130 permet à l'unité de traitement 24 de mettre fin à ce mode d'enregistrement et d'appliquer une impulsion sur la sortie 86 en direction du changeur de disque 74 de la Figure 3 afin que le disque présent dans le dispositif d'enregistrement 18 en soit éjecté.

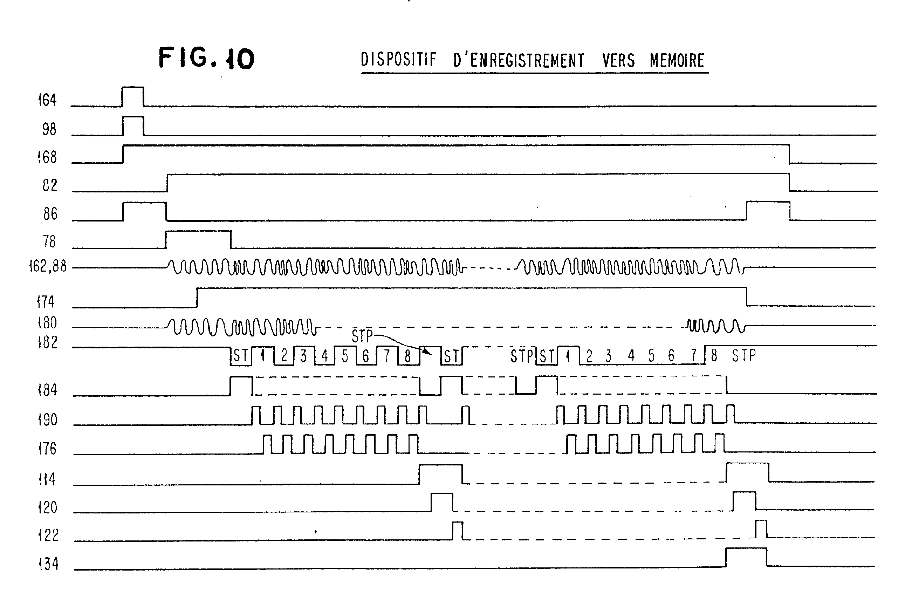

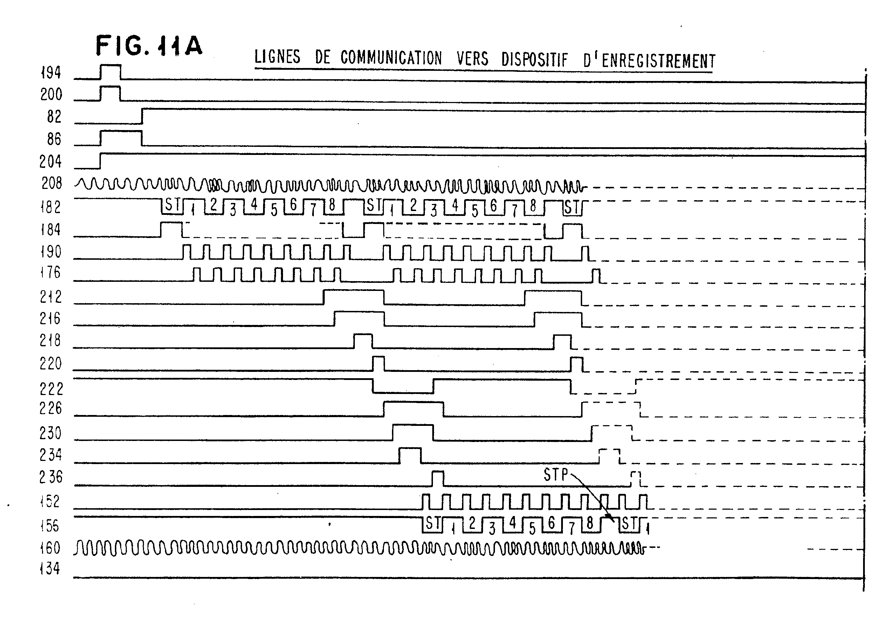

Dans le mode de fonctionnement dispositif d'enregistrement-mémoire, l'information sur le disque préalablement enregistré 70 est remise en mémoire pour une opération d'impression ultérieure. L'opératrice du système amorce ce mode de fonctionnement en enfonçant la touche de départ de lecture 44 sur le clavier 12 de la machine à écrire représentée sur la Figure 2. Sur la Figure 3, le clavier 12, en réponse à cette touche enfoncée, engendre un signal sur la sortie 164 en direction de l'unité de traitement 24. Comme le met en évidence le diagramme des temps du dispositif d'enregistrement-mémoire de la Figure 10, l'unité de traitement 24 de la Figure 5 met en service la porte de lecture 166, par la sortie 168, et restaure le registre d'adresses de mémoire 100, sur la sortie 98. Pendant ce temps, le relais 56 du dispositif d'enregistrement de données sous la commande de l'unité de traitement 24, met tous les commutateurs à deux positions 87 de la Figure 3 en position de commande par le système. Ensuite, l'unité de traitement 24 applique un signal de changement de disque sur la sortie 86 en direction du changeur de disque 74 et met en marche le moteur du dispositif d'enregistrement 18, par la sortie 84. Ensuite, l'unité de traitement 24 reçoit des sorties provenant du commutateur de disque 80 ainsi que du commutateur de position de tête 76 par les lignes de sortie respectives 82 et 78, ce qui indique que le dispositif d'enregistrement 18 est maintenant prêt à fonctionner.

Ensuite, l'unité de traitement 24, comme le montre la Figure 4, ouvre la porte de lecture 170 et la porte de désérialiseur 172 par les sorties respectives 174 et 176. Lorsque le premier signal de 2100 périodes par seconde est lu par la tête 68, une entrée est appliquée au démodulateur 180 par un trajet de lecture déjà établi par l'amplificateur de lecture 62 et la sortie 88 de la Figure 3, et par la porte de lecture 170 de la Figure 4 ce qui revient à une conversion analogique-numérique de l'information. A son tour, la sortie de démodulateur (signal d'espacement provoqué par le signal de 2100 Hertz) est envoyé par la sortie 182, la porte 172 du désérialiseur (qui a été ouverte lorsque la porte de lecture 170 a été ouverte) et la sortie 188, au registre à décalage (désérialiseur) 186, et une sortie de "démarrage de l'horloge du désérialiseur" 184 est envoyée à l'unité de traitement 24. L'horloge du désérialiseur, à son tour, engendre les impulsions sur l'entrée 190 afin d'actionner le registre désérialiseur 186. Dans le désérialiseur 186, les données en série sont reconverties en huit bits de données parallèles. Comme le montre le diagramme des temps de la Figure 10, des bits de départ et d'arrêt on été placés entre chacun des huit bits de données parallèles de sorte que les données puissent être identifiées rigoureusement. La sortie 192 en provenance du désérialiseur 186 est envoyée à la porte de lecture 166 représentée sur la Figure 5. Lorsqu'un bit d'arrêt doit apparaître dans le multiplet de données, l'unité de traitement 24 applique à la sortie 114 une impulsion qui actionne la porte d'entrée en mémoire 116. Ensuite, l'unité de traitement 24 fournit une impulsion de sortie 120 à la mémoire 26 afin de permettre aux données qui lui sont appliquées à partir de la porte d'entrée 116 d'être emmagasinées dans la première position de la mémoire de document 26. Ensuite, l'unité de traitement 24 fournit une impulsion de sortie 122 afin de lire le registre d'adresses de mémoire 100 pour que soit adressée la seconde position de la mémoire. Chaque multiplet d'information successif est traité de la même manière que celle décrite, jusqu'à ce que, durant l'opération de traitement, le comparateur détecte la lecture d'un code de fin de document. Lorsque ce code est détecté, la sortie 134 en provenance du comparateur 130 met fin à ce mode de fonctionnement dispositif d'enregistrement-mémoire, et le disque 70 est éjecté du dispositif d'enregistrement 18.

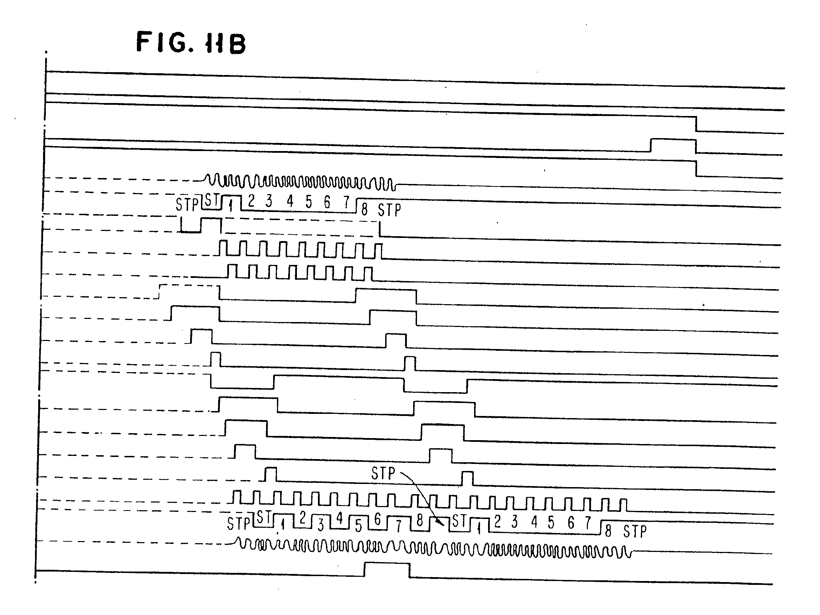

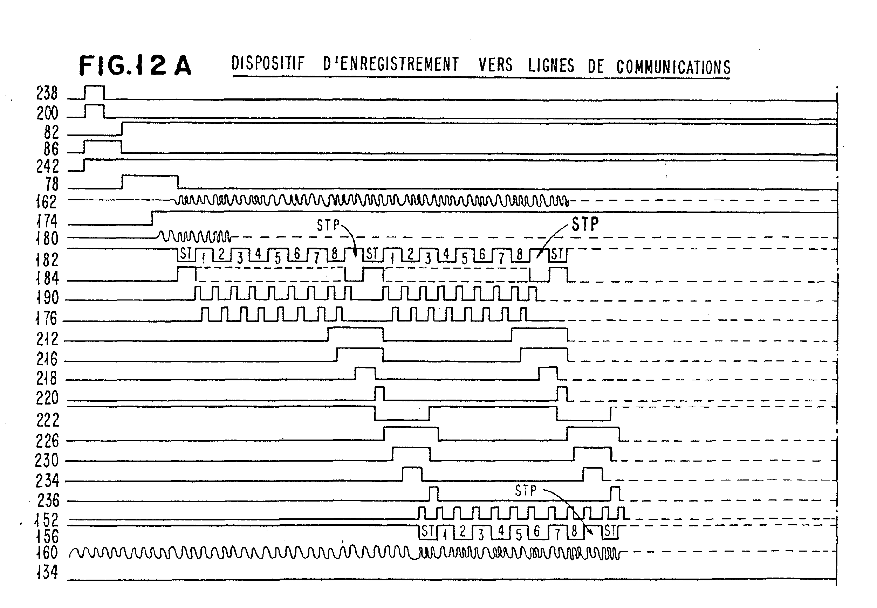

Le diagramme des temps des Figures 11A et 11B représente le mode d'opération dans lequel les données en provenance de la ligne téléphonique sont enregistrées dans le dispositif d'enregistrement. Les données analogiques détectées sur la ligne téléphonique sont démodulées, désérialisées et emmagasinées. Normalement, ce mode d'opération commence lorsque l'opératrice reçoit un appel téléphonique de quelqu'un qui désire transmettre des données au présent système. L'opératrice de l'autre système transmet un signal (par exemple de 1300 cycles/s) à l'opératrice du présent système lorsque la transmission débute. Quand l'opératrice du présent système entend ce signal, le récepteur téléphonique est placé dans le coupleur téléphonique 22 et la touche 46 (Figure 2) est abaissée de sorte qu'un signal est transmis sur la sortie 194 de la Figure 3 vers l'unité de traitement 24. A ce moment, l'unité de traitement 24 commande par la sortie 200 la remise à zéro des pointeurs d'entrée et sortie 196 et 298, et commande également la mise en place d'un disque dans le dispositif d'enregistrement 18 par la sortie 86 de la Figure 3. L'unité de traitement 24 conditionne alors la porte 202 par la sortie 204. La sortie 202 est maintenant connectée à la sortie 206 du coupleur téléphonique. Le signal reçu à l'origine par l'opératrice (montré en 208 sur la Figure 11) est démodulée et le démodulateur 178 envoie alors un signal de marquage au désérialiseur 186 par la sortie 182. L'horloge du désérialiseur est initialisée lorsque le signal d'espace de fréquence 2100 est reçu comme impulsion de départ (voir Figure 11).

Une fois que le premier caractère a été reçu, l'unité de traitement 24 de la Figure 6 ouvre la porte d'entrée 210 sur la sortie 212 et permet à la sortie provenant du pointeur d'entrée 196 d'adresser la mémoire de communication 28. Ensuite, les données provenant du désérialiseur 186 sont introduites dans la mémoire tampon 28 lorsque la porte 214 est ouverte par la sortie 216 provenant de l'unité de traitement 24. Les signaux continus décrits préalablement sont convertis par le désérialiseur 186 en des bits parallèles qui sont introduits dans la porte 214 de la Figure 6, sur la sortie 196 provenant de la Figure 4. La porte d'entrée d'adresses 210 a déjà codé la première position d'emmagasinage dans la mémoire tampon de communication 28 si bien que la donnée qui passe par la porte 214 est emmagasinée à cette position. Après quoi, l'unité de traitement 24 envoie des impulsions par la ligne 218 à la mémoire de communication 28 de la Figure 6. Le premier multiplet de données est ensuite emmagasiné dans la mémoire tampon 28. De nouveau, l'adresse du pointeur d'entrée est lue à partir de la seconde position d'emmagasinage de la mémoire 28 par la sortie 220 de l'unité de traitement 24. Si la sortie 222 du comparateur 224 indique que le pointeur d'entrée 196 et le pointeur de sortie 198 ne sont plus égaux parce que le pointeur d'entrée indique maintenant la deuxième position d'emmagasinage de la mémoire 28 alors que le pointeur de sortie indique toujours la première position, l'unité de traitement envoie des impulsions sur la sortie 226 pour conditionner la porte 228, sur la sortie 230 vers la porte 232, et sur la sortie 234 pour adresser la partie lecture de la mémoire tampon 28. Ceci fait que le pointeur 198 adresse la mémoire tampon de communication 28 et en extrait les données qui ont été emmagasinées dans la première position d'emmagasinage. Cette information est envoyée par l'intermédiaire de la mémoire tampon 232 par la sortie 154 pour atteindre le sérialiseur 150 de la Figure 4.

Sur la Figure 4, les données extraites de la première position de mémoire de la mémoire tampon de communication 28 sont sérialisées et remodulées par le modulateur 158 et sont envoyées au dispositif d'enregistrement 18 par la porte d'enregistrement 142 et la sortie 90 (d'une manière semblable à celle utilisée dans le mode de fonctionnement mémoire-dispositif d'enregistrement décrit préalablement).

Le fonctionnement précédent fournit au dispositif d'enregistrement des signaux presque totalement dépourvus de distorsion de ligne. Ensuite, l'adresse du pointeur de sortie est transmise par la sortie 236 provenant de la l'unité de traitement 24 de la Figure 6. Cette séquence d'étapes se poursuit jusqu'à réception d'un code de fin de document qui coïncide avec le code de fin de document 128 du comparateur 130. Lorsque ce signal est reçu, le signal sur la sortie 134 provenant du comparateur 130 met fin à ce mode de fonctionnement.

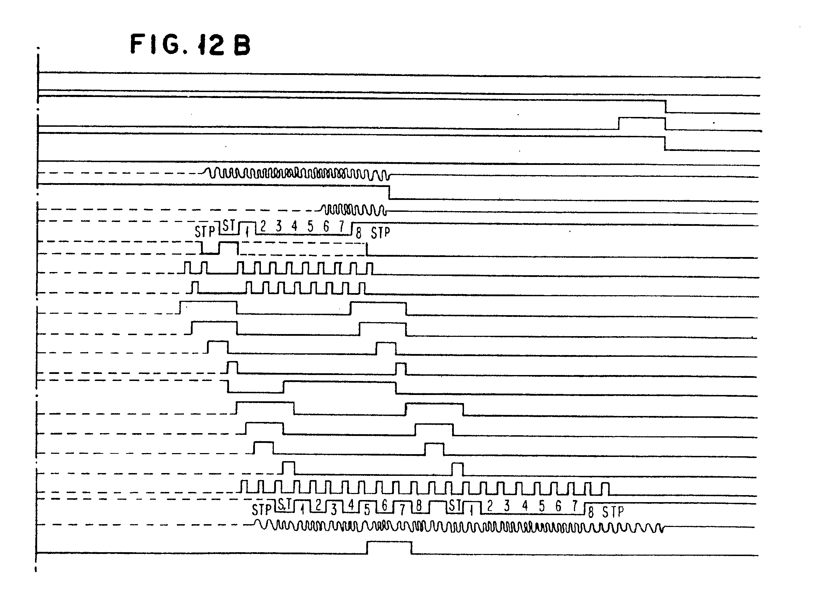

Lorsque les étapes de ce dernier mode de fonctionnement sont inversées, on obtient le fonctionnement dispositif d'enregistrement-ligne de communication décrits en référence au diagramme des temps des Figures 12A et 12B. Dans ce cas, l'opératrice du système désire transmettre des données à un terminal. En conséquence, lorsque l'autre système est prêt, l'opératrice enfonce la touche d'envoi de données 48 du clavier 12 représentée sur la Figure 1. Sur la Figure 3, un signal provenant du clavier 12 est introduit dans l'unité de traitement 24 par la sortie 238. Cet enfoncement de touche produit une tonalité sur la ligne téléphonique qui indique à l'opératrice le moment où elle doit enfoncer la touche de réception de données. Chaque fois que cette touche est enfoncée, une connexion est établie entre les deux systèmes.

Ce signal de clavier fait que l'unité de traitement 24, par la sortie 200, restaure le pointeur d'entrée 196 et le pointeur de sortie 198 représentés sur la Figure 6. En outre, ce signal permet au changeur de disque de fonctionner et de placer un disque dans la machine (qui pourrait être le disque enregistré préalablement), et la porte d'envoi 240 reçoit des impulsions sur la sortie 242 à partir de l'unité de traitement 24, comme le montre la Figure 4. En outre, l'unité de traitement 24 représentée sur la Figure 5 ferme la porte de lecture 166. Lorsque le dispositif d'enregistrement 18 de la Figure 3 commence à lire l'information sur le disque 70, les données apparais-

0017715

sant sur la sortie 88 comme le montrent les Figures 3 et 4, provoquent la fermeture de la porte de lecture 170 lorsqu'un signal de marquage préliminaire est lu par le dispositif d'enregistrement 18. Les données sont ensuite démodulées et le signal série produit par le démodulateur est ensuite désérialisé par le désérialiseur 186, la sortie 192 de ce dernier étant l'entrée de la porte 214 de la Figure 6. Etant donné que les étapes restantes de ce mode de fonctionnement sont exactement les mêmes que celles intervenant dans le mode de fonctionnement précédent (ce qui est mis en évidence en comparant les diagrammes des temps des Figures 11 et 12), ces étapes ne vont pas être décrites plus avant. Ensuite, les données sont temporairement emmagasinées dans la mémoire tampon de communication 28 et sont envoyées sur la sortie 154 au sérialiseur 150 de la Figure 4. Les données sérialisées sont ensuite modulées par le modulateur 158 avant d'être envoyées sur la ligne téléphonique 30 au système terminal. Cette opération fournit sur la ligne téléphonique une information des signaux dépourvus de toute distorsion pouvant être introduite par les opérations précédentes d'enregistrement-lecture. De nouveau, ce mode de fonctionnement se termine par un signal de fin sur la sortie 134 en direction de l'unité de traitement 24 de la Figure 6.

REVENDICATIONS                          0017715

1.- Système de traitement, d'enregistrement et de communication de données entrées par clavier comprenant des moyens pour engendrer des signaux numériques en réponse à l'actionnement des touches d'un clavier, une mémoire pour emmagasiner les signaux numériques ainsi engendrés, un dispositif d'impression pour imprimer les caractères correspondant auxdits signaux numériques, un dispositif d'enregistrement pour enregistrer des signaux analogiques de la bande vocale; ledit système étant caractérisé en ce qu'il comprend:

un moyen de conversion pour convertir les signaux numériques engendrés en réponse à l'actionnement des touches du clavier, en signaux analogiques de la bande vocale pouvant être enregistrés par ledit dispositif d'enregistrement,

un second moyen de conversion pour convertir les signaux analogiques enregistrés par ledit dispositif d'enregistrement en signaux numériques pouvant être emmagasinés dans ladite mémoire,

un moyen de communication pour la transmission des signaux analogiques de la bande vocale entre ledit système et un système éloigné, et

des moyens de connexion pour connecter lesdits premier et second moyens de conversion entre ledit dispositif d'enregistrement et ledit moyen de communication, de façon à convertir les signaux analogiques à transmettre au système éloigné en signaux analogiques de manière à éliminer la distorsion.

2.- Système selon la revendication 1, caractérisé en ce que les signaux analogiques de la bande vocale reçus par ledit système en provenance d'un système éloigné sont convertis en signaux numériques et reconvertis en signaux analogiques de la bande vocale par lesdits premier et second moyens de conversion, de manière à éliminer la distorsion créée par la transmission à partir dudit système éloigné.

3.- Système selon la revendication 1 ou 2, caractérisé en ce que ledit premier moyen de conversion est un modulateur et ledit second moyen de conversion est un démodulateur, l'ensemble formant un modem.

4.- Système selon la revendication 3, caractérisé en ce que ledit modulateur convertit les signaux numériques en signaux analogiques de deux niveaux de fréquence vocale 1300 et 2100 Hertz.

5.- Système selon la revendication 3 ou 4, caractérisé en ce qu'il comprend une mémoire tampon connectée entre ledit démodulateur et ledit modulateur, de façon à éliminer les erreurs d'enregistrement et de transmission des signaux analogiques de la bande vocale transmis entre ledit dispositif d'enregistrement et ledit système éloigné.

6.- Système selon la revendication 5, caractérisé en ce qu'il comprend en outre un moyen de désérialisation connecté entre ledit démodulateur et ladite mémoire tampon pour désérialiser les signaux numériques transmis du démodulateur à la mémoire tampon, et un moyen de sérialisation connecté entre ladite mémoire tampon et ledit modulateur pour sérialiser les signaux numériques transmis de la mémoire tampon au modulateur.

7.- Système selon la revendication 6, caractérisé en ce que les signaux numériques désérialisés par ledit moyen de désérialisation sont emmagasinés dans ladite mémoire du système.

8.- Système selon l'une quelconque des revendications précédentes, caractérisé en ce que ledit dispositif d'enregistrement est un appareil d'enregistrement magnétique de la voix.

9.- Système de traitement, d'enregistrement et de communication de données entrées par clavier fonctionnant en mode de communication dans lequel des signaux sont transmis et reçus d'un site éloigné, et en mode local dans lequel des signaux sont engendrés, emmagasinés et affichés, ledit système étant caractérisé en ce qu'il comprend:

un moyen d'entrée pour engendrer séquentiellement des signaux numériques lorsque le système est en mode local,

une mémoire tampon pour emmagasiner lesdits signaux numériques en réponse audit moyen d'entrée,

un moyen de visualisation de données pour donner des représentations visuelles desdits signaux numériques emmagasinés dans ladite mémoire tampon,

une ligne de communication pour transmettre des signaux analogiques de la bande vocale vers le site éloigné, et recevoir des signaux analogiques de la bande vocale en provenance dudit site éloigné,

un modulateur pour engendrer des signaux analogiques de la bande vocale en réponse aux signaux numériques emmagasinés dans ladite mémoire tampon, lorsque le système est en mode local,

un dispositif d'enregistrement et de reproduction pour, en réponse à un premier signal de commande, sélectivement fonctionner dans un premier mode dans lequel des messages vocaux pré-enregistrés sont reproduits ou fonctionner dans un second mode dans lequel ledit dispositif enregistre les signaux analogiques de la bande vocale fournis par ledit modulateur, ledit dispositif reproduisant lesdits signaux analogiques enregistrés en réponse à un second signal de commande,

un démodulateur pour, en réponse audit second signal de commande, démoduler les signaux analogiques de la bande vocale reproduits par ledit dispositif d'enregistrement et de reproduction fonctionnant dans le premier mode ou dans le second mode en signaux numériques, et pour démoduler les signaux analogiques de la bande vocale reçus sur ladite ligne de communication en signaux numériques lorsque le système est en mode de communication; ledit modulateur engendrant des signaux analogiques de la bande vocale correspondant aux signaux numériques en provenance dudit démodulateur lorsque le système est en mode de communication et ladite mémoire tampon emmagasinant les signaux numériques en provenance dudit démodulateur lorsque le système est en mode local.

10.- Système selon la revendication 9, caractérisé en ce que ledit moyen d'entrée est le clavier d'une machine à écrire et ledit moyen de visualisation de données est le dispositif d'impression de la machine à écrire.

11.- Système selon la revendication 9 ou 10, caractérisé en ce que ledit dispositif d'enregistrement et de reproduction est une unité d'enregistrement magnétique de la voix fonctionnant comme une machine à dicter dans ledit premier mode et fonctionnant comme enregistreur de signaux analogiques de la bande vocale dans ledit second mode.

**FIG. 1**

**FIG. 2**

FIG. 3

FIG. 5

FIG. 4

FIG.5

FIG. 6

FIG. 4

FIG. 7

CLAVIER VERS MEMOIRE

FIG. 8

MEMOIRE VERS IMPRIMANTE

## FIG. 9    MEMOIRE VERS DISPOSITIF D'ENREGISTREMENT

FIG. 10    DISPOSITIF D'ENREGISTREMENT VERS MEMOIRE

# FIG. 11A

FIG. 11B

STP ST 1 2 3 4 5 6 7 8 STP

STP ST 1 2 3 4 5 6 7 8 STP ST 1 2 3 4 5 6 7 8 STP

STP

FIG.12 A DISPOSITIF D'ENREGISTREMENT VERS LIGNES DE COMMUNICATIONS

FIG. 12 B